# EUROPÄISCHE PATENTSCHRIFT

(11) **EP 1 977 882 B1**
(45) Veröffentlichungstag und Bekanntmachung des Hinweises auf die Patenterteilung: **24.06.2020**
(21) Anmeldenummer: 08400021.5
(22) Anmeldetag: 01.04.2008
(51) Int. Cl.: B29C 70/38, D04H 1/4342, D04H 1/4218, D04H 1/4242, D04H 13/00

(54) **Verfahren und Vorrichtung zur partiellen Verstärkung einer Warenbahn**
Method and device for partial reinforcement of a support material
Procédé et dispositif destinés au renforcement partiel d'un matériau de support

(30) Priorität: 02.04.2007 DE 102007016150
(43) Veröffentlichungstag der Anmeldung: 08.10.2008
(73) Patentinhaber: Cetex Institut gGmbH, 09120 Chemnitz (DE)
(72) Erfinder: Heinrich, Hans-Jürgen, Dipl.-Ing, 09247 Chemnitz OT Röhrsdorf (DE); Kirchberg, Astrid, Dipl.-Ing, 09128 Chemnitz OT Euba (DE); Reuchsel, Dietmar, Dipl.-Ing, 09127 Chemnitz (DE); Seifert, Matthias, Dipl.-Ing, 09385 Lugau (DE); Vettermann, Frank, Dipl.-Ing., 09387 Jahnsdorf (DE)
(74) Vertreter: Steiniger, Carmen

(56) Entgegenhaltungen:
- EP-A- 1 584 462
- WO-A-02/09935
- WO-A-84/00351
- FR-A- 2 889 103
- US-A1- 2003 141 010

## Beschreibung

Die Erfindung betrifft ein Verfahren und eine Vorrichtung zur partiellen Verstärkung einer Warenbahn.

Warenbahnen mit uni- oder multidirektionaler Verstärkung zur Aufnahme von in verschiedenen Richtungen einwirkenden Belastungen sind hinreichend bekannt, desgleichen verschiedene Herstellungsverfahren.

Derartige Warenbahnen sind vorteilhaft für eine Reihe von Anwendungen einsetzbar. Sie weisen jedoch auch entscheidende Nachteile auf. So sind u. a. die Möglichkeiten der richtungsvariablen Einbringung von Verstärkungen begrenzt. Meist handelt es sich um Bahnen mit einer Lage, die vorzugsweise Last in Längsrichtung (sog. NullGrad-Lage) aufnehmen kann und die mit Lagen mit Lastaufnahmerichtungen im Winkel von von +a und/oder - α zur Längsrichtung kombiniert ist. Die Lage der lastaufnehmenden Verstärkungen entspricht daher nicht immer dem tatsächlichen Kraftfluss in der Bahn bzw. dem aus dieser Bahn hergestellten Bauelement.

Derartige Bahnen werden außerdem als kontinuierliche Erzeugnisse hergestellt. Viele Endprodukte bedingen jedoch, dass die zu verarbeitenden Bahnen mit Ausschnitten versehen werden. Derartige Ausschnitte führen jedoch dazu, dass der Kraftfluss in der Bahn unterbrochen wird; die Lastaufnahmefähigkeit wird z. T. erheblich gemindert.

Eine Alternative, die diese Nachteile vermeidet, ist die Technologie des "Tailored Fiber Placements" (TFP). Sie ermöglicht es, Grundbahnen mit lastaufnehmenden Verstärkungen in Form von bspw. Rovings aus Glas, Aramid, Karbon oder anderen Kunststoffen mit besonderen Einsatzmerkmalen wie hohe Festigkeit, hohe Schlagzähigkeit, hohe Bruchdehnung, gute Schwingungsdämpfung sowie Beständigkeit gegenüber Säuren und Laugen, Hitze- und Feuerbeständigkeit zu versehen und dauerhaft zu verbinden. Derartige Rovings bestehen i. d. R. aus einer hohen Zahl von miteinander verbundenen Einzelfilamenten und weisen eine bändchenförmige Gestalt auf.

Die TFP-Technologie vermag insbesondere die Verstärkungselemente so auf der Trägerbahn anzuordnen, dass sie weitestgehend dem späteren Kraftfluss im fertigen Bauteil entsprechen. Nachteilig ist allerdings, dass der TFP-Prozess infolge der Einzelverlegung und -befestigung der Rovings mittels Sticktechnologie außerordentlich aufwendig ist.

Es ist weiterhin bekannt, Verstärkungselemente in Bändchenform gruppenweise auf einem sich relativ zu einer Speiseeinrichtung für die Bändchen bewegenden Trägerbahn abzulegen und mechanisch oder mittels einer Klebebindung mit dieser zu verbinden. Hierzu sind eine Reihe von Vorrichtungen bekannt, die jedoch alle in sich Nachteile bergen.

So stellt die US 20030141010 ein Verfahren und eine Vorrichtung zur Herstellung von Prepregs zur Verfügung. Eine Schar von mit Abstand zueinander parallel geführten Fasern wird an einer aus zwei zusammenwirkenden Rollen bestehenden Presseinrichtung zwischen zwei Bahnen eingebunden und fixiert. Ein der Presseinrichtung vorgeordnetes Walzenpaar führt die Faserschar zwischen sich und vermag dieser durch senkrecht zur Laufrichtung der Bahnen gerichtetes Changieren der Faserschar eine von der Laufrichtung abweichende Lage zu verleihen und sie so zwischen den Bahnen abzulegen. Nachteilig ist zum einen, dass eine gezielte, den Erfordernissen der späteren Beanspruchung des Prepregs entsprechende Änderung des Abstandes der Fasern nicht möglich ist. Ist außerdem erwünscht, dass mehrere unterschiedlich verlaufende Faserscharen zwischen die Bahnen eingebunden werden, so müssen mehrere derartige Vorrichtungen hintereinandergeschaltet und außerdem jeweils wieder eine die neue Faserschar fixierende Bahn zugeführt werden. Dies führt vorrichtungsseitig zu einer erheblichen Vergrößerung des erforderlichen Bauraums, erzeugnisseitig zu einer unerwünschte Verdickung und Verteuerung des Prepregs.

Das Changieren der Schar führt außerdem zwangsläufig dazu, dass die einzelnen Fasern der Schar je nach ihrem Winkel zur Längsachse der Bahnen einen unterschiedlichen Abstand einnehmen. Dies kann unerwünscht sein, ist aber bei dieser Vorrichtung nicht beeinflussbar. Sollten mit dieser Vorrichtung statt der Fasern Bändchen verlegt, käme es bei starken Richtungsänderungen bei der Verlegung zu erheblichen Materialstaus, die nicht hinnehmbar wären.

Demgegenüber stellen sowohl die FR 2 889 103 als auch die WO 8400351 Vorrichtungen zur Verfügung, die es mittels eines beweglichen Rechens bzw. eines Rechens mit divergierenden Zinken ermöglichen, den Abstand zwischen den Elementen der einer Trägerbahn zugeführten Schar von Verstärkungselementen zu verändern, eine Ablage der Verstärkungselemente entlang einer vorgegebenen Kurve ist nicht möglich. Während bei der Vorrichtung gemäß WO 8400351 der minimale Abstand der Verstärkungselemente durch die Dicke der divergierenden Zinken des Rechens bestimmt wird, ermöglicht es die Vorrichtung gemäß FR 2 889 103 zumindest, die Verstärkungselemente lückenlos nebeneinander zu verlegen. Weitere Variationsmöglichkeiten besitzt sie jedoch nicht. Insbesondere ist die Bahn der einzelnen Verstärkungselemente nur insoweit beeinflussbar, als die "Frequenz" der Abstandsänderungen steuerbar ist. Eine Verlegung entlang einer frei vorgebbaren Bahn ist nicht möglich.

Der Erfindung liegt deshalb die Aufgabe zugrunde, eine Technologie zur partiellen Verstärkung von Warenbahnen durch kraftflussgerechtes Verlegen und dauerhaftes Verbinden der Bändchen zu schaffen, die ein gleichzeitiges Aufbringen von Bändchen in größerer Anzahl mit der Möglichkeit sowohl der Ablage entlang einer vorgebbaren Kurve als auch der Abstandsänderung der Bändchen gestattet.

Diese Aufgabe wird durch die Erfindung gemäß dem kennzeichnenden Teil des Patentanspruches 1 gelöst. Weitere vorteilhafte Merkmale enthalten die Ansprüche 2 bis 5. Die Erfindung stellt außerdem eine Vorrichtung zur Verfügung, die dem Anspruch 6 zu entnehmen ist und durch die Ansprüche 7 bis 13 weiter ausgestaltet wird.

Nachfolgend wird die Erfindung anhand eines Ausführungsbeispieles näher beschrieben. Die zugehörigen Zeichnungen zeigen in
- Fig. 1a bis 1i: Legungsbilder für die erfindungsgemäße Verlegung von Bändchen,
- Fig. 2a bis 2g: weitere mögliche Legungsbilder für die erfindungsgemäße Verlegung von,
- Fig. 3: eine Darstellung einer Warenbahn mit verlegten Bändchen,
- Fig. 4: eine Darstellung der Möglichkeiten der gegenseitigen Anordnung der Bändchen,
- Fig. 5: eine Ansicht einer erfindungsgemäßen Vorrichtung,
- Fig. 6 bis 8: Detaildarstellungen der erfindungsgemäßen Vorrichtung nach Fig. 5,
- Fig. 9: ein Getriebeschema für die erfindungsgemäße Vorrichtung und in
- Fig. 10: eine Darstellung für die Anordnung mehrerer erfindungsgemäßer Vorrichtungen.

Unter Bändchen sind insbesondere Rovings aus Glas, Aramid, Karbon oder anderen Kunststoffen mit besonderen Einsatzmerkmalen wie hohe Festigkeit, hohe Schlagzähigkeit, hohe Bruchdehnung, gute Schwingungsdämpfung sowie Beständigkeit gegenüber Säuren und Laugen, Hitze- und Feuerbeständigkeit zu verstehen.

Warenbahn im Sinne der Erfindung kann jegliches bahnförmiges Gebilde sein, welches zur Aufnahme der genannten Bändchen und zur Verbindung mit diesen geeignet ist. In Frage kommen also z. B. Gewirke, Gelege, Gestricke, Gewebe, Vliese, Folien o. ä.

Die Vereinigung der auf eine Warenbahn aufgelegten Bändchen kann ebenfalls auf verschiedenste Art und Weise erfolgen, so z. B. durch Vernähen in einem Nähwirkprozess, Vernadeln, Verkleben, Verharzen, Thermofixieren, Kalandern etc.

Die mittels der Erfindung herstellbaren Flächengebilde finden ihre Anwendung als Werkstoff überall dort, wo neben niedriger Masse hohe Festigkeits- und Verschleißeigenschaften gefordert werden, bspw. also in der Luft- und Raumfahrt, im Behälterbau etc. Bei derartigen Anwendungen kommt es u. a. darauf an, dass die Flächengebilde gezielt der späteren Belastung entsprechend konstruiert und hergestellt werden. Das bedeutet im vorliegenden Fall, dass die Bändchen bspw. der späteren Geometrie eines Bauteils und/oder vorhersehbaren Belastungen Rechnung tragen und kraftflussgerecht im Bauteil bzw. Werkstoff angeordnet werden.

Die zu verlegenden Bändchen liegen vorzugsweise in Form von Rovings vor, die aus einer Vielzahl von Einzelfilamenten bestehen und überwiegend eine bandförmige Gestalt aufweisen. Die Zuführung erfolgt scharweise bevorzugt von einer oder mehreren Spulen.

Die Erfindung sieht nun vor, die Bändchen entsprechend einer vorgegebenen Kontur auf der Warenbahn 1 abzulegen und dort zu fixieren.

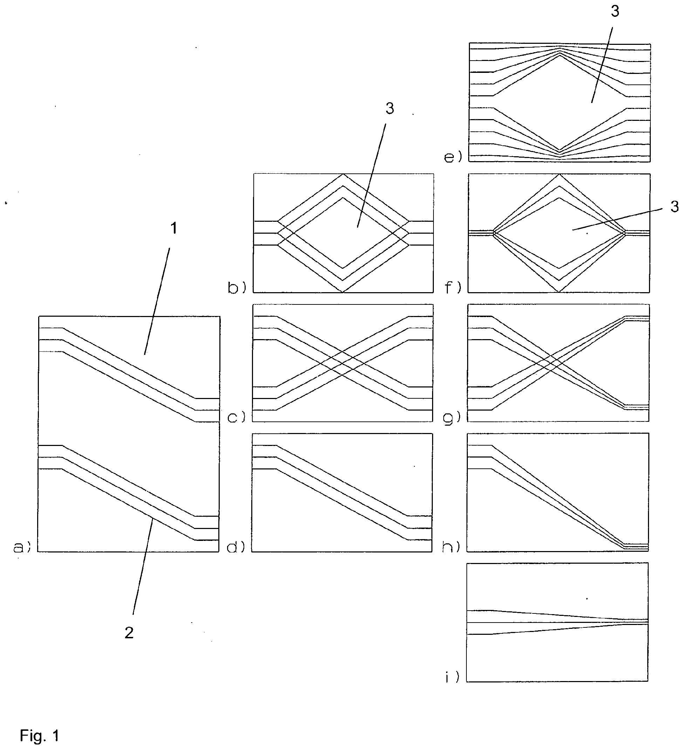

Beispiele für solche Konturen zeigen die Fig. 1 bis 3. Als Beispiel für zu verlegende Scharen sind in diesen Fig. jeweils nur wenige Bändchen 2 dargestellt. Deutlich ist diesen Figuren zu entnehmen, dass die Bändchen 2 in mehreren voneinander unabhängigen Gruppen geführt werden können.

Die einfachste Form besteht in der parallelen Verlegung der Bändchen 2, wie sie in den Fig. 1a bis 1d dargestellt ist. In Fig. 1a werden dabei zusätzlich zwei verschiedene Gruppen von Bändchen 2 (als Beispiel für die Verlegung mehrerer Gruppen) parallel zueinander geführt, was in den drei anderen Fig. nicht der Fall ist. Fig. 1b zeigt zwei Gruppen von Bändchen 2, die zunächst parallel mit vollständiger oder annähernder Überdeckung geführt werden, sich dann voneinander entfernen und wieder annähern, so dass ein von Bändchen 2 freier Bereich 3 auf der Warenbahn 1 gebildet wird, in den in einem nachfolgenden Verarbeitungsschritt bspw. eine Öffnung eingebracht werden kann.

Fig. 1c hingegen zeigt eine Überkreuzung zweier Gruppen von Bändchen 2, wobei die Bändchen 2 parallel zueinander geführt werden.

Während die bisher genannten Varianten davon ausgehen, dass die Bändchen 2 innerhalb einer Gruppe zueinander parallel geführt werden (Fig. 1a-d), verdeutlichen die Fig. 1e-i die Möglichkeit, die individuellen Abstände zwischen den Bändchen 2 nach Bedarf zu verringern oder zu vergrößern. In diesem Falle sieht die Erfindung verschiedene Varianten vor, von den Bändchen 2 nicht bedeckte Bereiche auf der Warenbahn 1 durch geeignete Maßnahmen zu vermeiden:
- Die Bändchen 2 werden in Bereichen, in denen die Bändchen 2 einer Gruppe auseinanderstrebend verlaufen, in ihrer individuellen Breite so vergrößert (verbreitert), dass die Divergenz ausgeglichen wird.
- Die Bändchen 2 werden außerhalb auseinanderstrebender Bereiche mit ausreichender Überdeckung geführt, welche in den divergierenden Bereichen bis dahin aufgelöst werden kann, dass die Bändchen 2 lückenlos nebeneinander liegen.

Bereiche hingegen, in denen sich die Bändchen 2 einer Gruppe einander annähern, können folgendermaßen gestaltet werden:
- Die Bändchen 2 werden in den Bereichen, in denen sie sich einander annähern, in ihrer individuellen Breite so verringert, dass keine Überdeckung untereinander entsteht.
- Die Bändchen 2 werden außerhalb der betreffenden Bereiche lückenlos nebeneinander geführt und in den Bereichen zur Überdeckung gebracht.

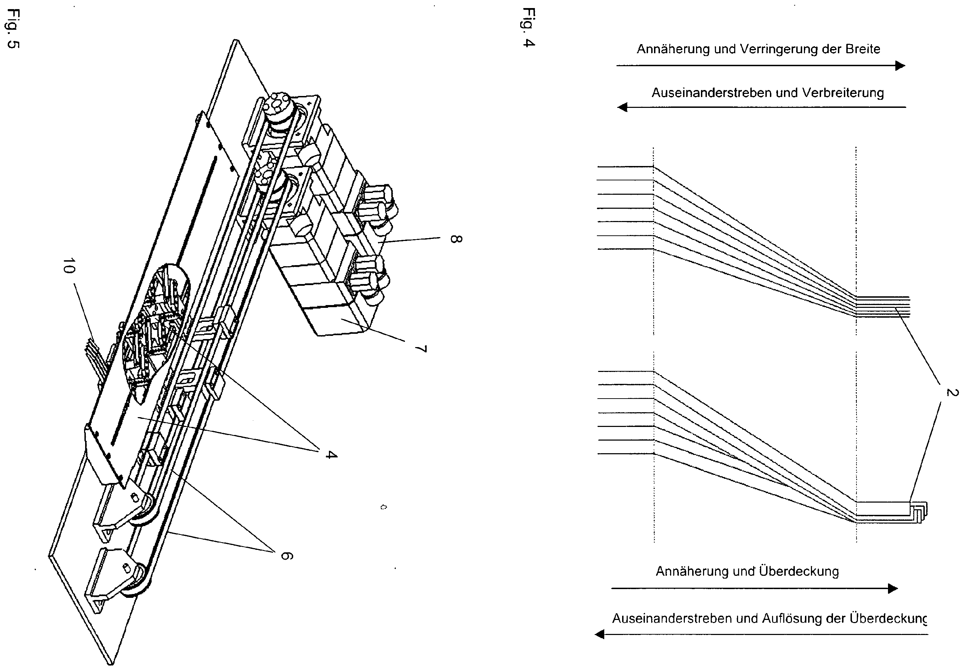

Diese Möglichkeiten sind im Detail Fig. 4 zu entnehmen, wobei je nach Arbeitsrichtung ein Bereich mit auseinanderstrebenden oder einander annähernden Bändchen 2 verdeutlicht werden kann. Fig. 4a zeigt die beiden Varianten, in denen eine Vergrößerung bzw. Verringerung der Breite der Bändchen erfolgt, Fig. 4b hingegen die Varianten, in denen eine Überdeckung der Bändchen 2 erzeugt bzw. aufgelöst wird.

Die divergierenden bzw. konvergierenden Linien in den Fig. 1e-f beinhalten jeweils beide der o. a. Möglichkeiten.

Im Übrigen sind auch auf diese Weise freie Bereiche (z. B. Fig 1e oder 1f) oder Bereiche mit Überkreuzungen herstellbar.

Alle diese genannten Möglichkeiten können selbstverständlich auch miteinander kombiniert werden, um das gewünschte Ergebnis zu erreichen.

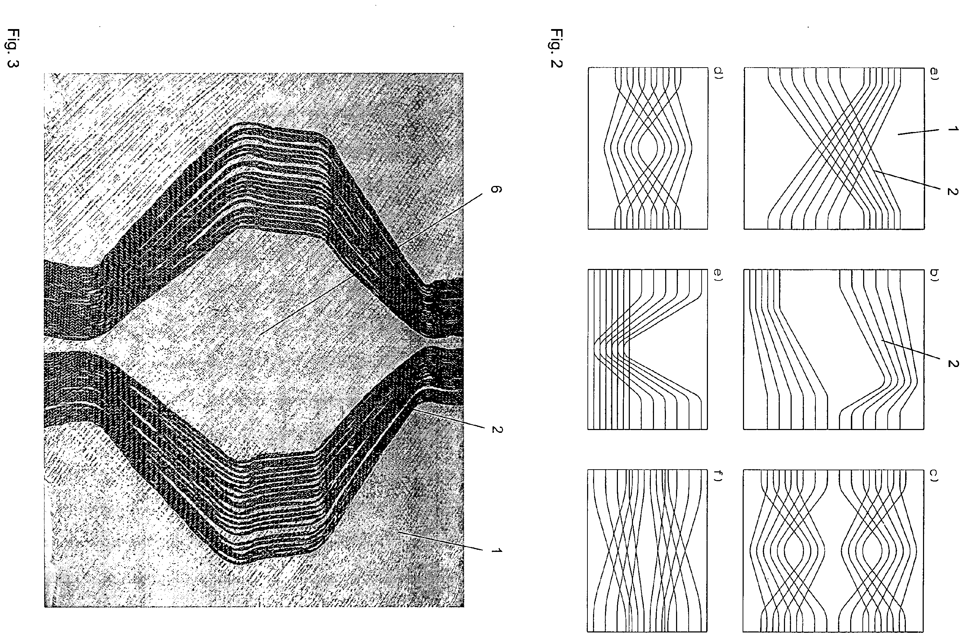

Die Fig. 2a-f zeigen weitere Möglichkeiten geometrie- und/oder kraftflussgerecht auf die spätere Verwendung des fertigen Flächengebildes ausgerichteter Legungsbilder. Fig. 3 schließlich läßt erkennen, dass auch eine Verlegung mit einem begrenzten Abstand zwischen den einzelnen Bändchen 2 einer Schar nicht ausgeschlossen ist. Dies kann vor allem dann von Bedeutung sein, wenn die Anwendungskriterien der fertigen Bahn eine lückenlose Verlegung des kostenintensiven Bändchenmaterials nicht erfordern und demzufolge einer Kosteneinsparung der Vorrang gegeben werden kann.

Nach der Verlegung der Bändchen 2 auf der Warenbahn 1 wird letztere einer Fixierungseinheit zugeführt, die dafür sorgt, dass Warenbahn 1 und Bändchen 2 eine vorzugsweise mechanische oder physikalisch-chemische Verbindung miteinander eingehen. Dies kann beispielsweise dadurch erfolgen, dass sich unmittelbar hinter dem Verlegebereich eine Wirkstelle befindet, in der Warenbahn 1 und Bändchen 2 durch Fäden miteinander verbunden werden. Wichtig ist hierbei wie auch bei anderen Varianten, dass Verlegebereich und Wirkstelle (Fixierungseinheit) möglichst nahe aneinander positioniert sind, um Verrutschen oder Verschieben der Bändchen 2 auf der Warenbahn zu vermeiden. Die Fixierung kann aber auch erfolgen, indem die Warenbahn 1 vor dem Verlegen mit einem Klebstoff versehen wird, an dem die Bändchen 2 haften, oder dass die Warenbahn 1 mit einer Substanz beschichtet ist, die unter Druck und/oder Wärmeeinwirkung eine physikalische oder chemische Verbindung mit den Bändchen 2 eingeht. Mit dieser Aufzählung soll jedoch die Zahl der Möglichkeiten der Herstellung einer Lagesicherung der Bändchen 2 auf der Warenbahn 1 nicht eingeschränkt werden.

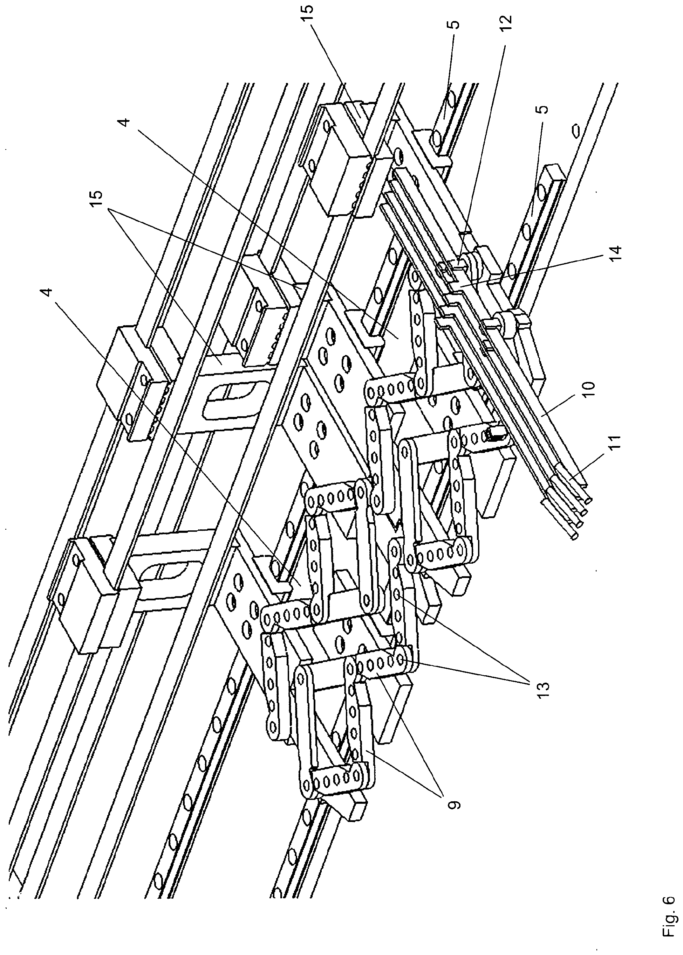

Ein Beispiel für eine zur Durchführung des Verfahrens verwendbare Vorrichtung zeigen die Fig. 5 und 6. In der gewählten Konfiguration ist sie bspw. geeignet, ein Legungsbild entsprechend Fig. 1e zu erzeugen. Über der hier nicht dargestellten Warenbahn 1 sind zwei voneinander unabhängig betreibbare Verlegemechanismen 4 angeordnet. Die beweglichen Elemente der noch näher zu beschreibenden Verlegemechanismen 4 werden auf Schienen 5 geführt und über Riemen 6, an die sie mittels Klemmung angekoppelt sind, von zwei Servoantrieben 7 und 8 angetrieben. Die Anordnung ist so gewählt, dass die Verlegemechanismen 4 sich nahezu über die gesamte Breite der Warenbahn 1 bewegen können (Fig. 5).

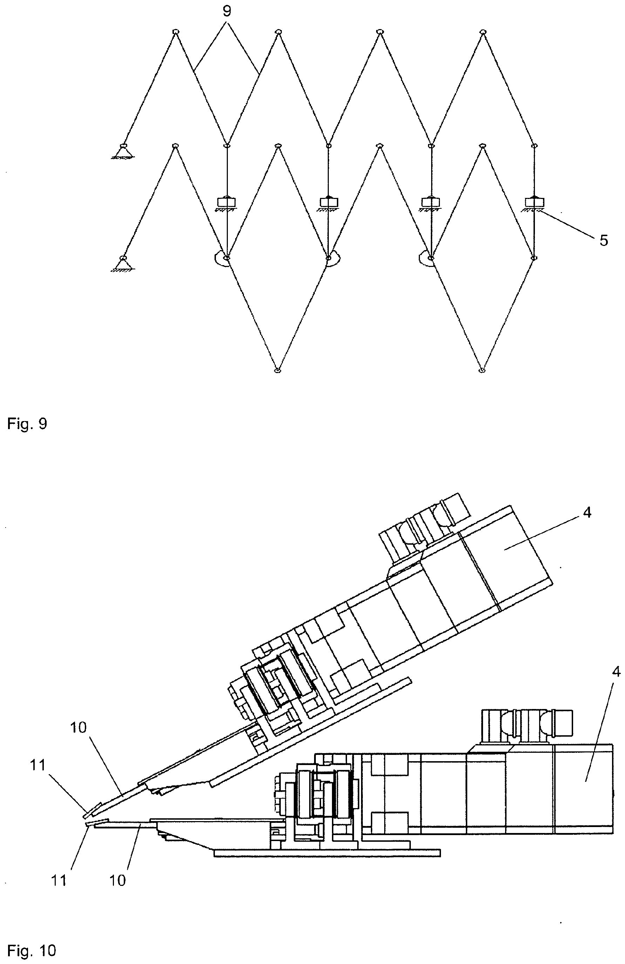

Ein Verlegemechanismus 4 besteht aus einem vielgliedrigen Koppelgetriebe nach Art einer "Nürnberger Schere". Dieses Koppelgetriebe ist in Fig. 9 nochmals schematisch dargestellt. Auf den aus verschiedenartigen Getriebegliedern 9 bestehenden "Parallelogrammen" dieses Verlegemechanismus 4 sind parallel zueinander Fadenführer 10 angeordnet, mittels deren die Bändchen 2 auf der Warenbahn 1 abgelegt werden. Die Fadenführer 10 sind bspw. stegförmig ausgebildet und weisen an ihrer Spitze zur Warenbahn 1 hin geneigte Fadenführerelementen 11 auf. Diese Fadenführerelementen 11 können eine kreisförmigen oder auch einen dem Querschnitt der Bändchen 2 angepassten Querschnitt haben. Die Fadenführer 10 sind schiebebeweglich in Lagergabeln 12 angeordnet, die wiederum drehbeweglich von Bohrungen 13 der Getriebeglieder 9 aufgenommen werden. Außerdem sind die Fadenführer 10 an ihrer Oberseite mit Füßen 14 versehen, die von einer nicht dargestellten, vorzugsweise geradlinigen Führungsnut übergriffen werden. Im Falle einer noch zu beschreibenden Teilungsänderung des Verlegemechanismus 4 sorgt die Führungsnut dafür, dass die Fadenführer 10 mit Ausnahme einer seitlichen Abstandsänderung ihre gegenseitige Lage beibehalten.

Die aus den Getriebegliedern 9 bestehenden Koppelgetriebe selbst sind mit ihren Gestellpunkten auf Führungswinkeln 15 angeordnet, die auf den Schienen 5 längsbeweglich gelagert sind und je nach Erfordernis (d. h. in Abhängigkeit vom zu erzeugenden Legungsbild) wahlweise mit dem oberen oder unteren Trum eines der beiden Riemen 5 fest verbunden werden können. Im dargestellten Fall ist der linke Verlegemechanismus 4 mit den oberen, der rechte Verlegemechanismus 4 mit den unteren Trums der Riemen 5 verbunden; die beiden Verlegemechanismen 4 bewegen sich also gegenläufig zueinander.

Werden die beiden Riemen 6 von den Servoantrieben 7 und 8 synchron angetrieben, so führen die beiden Verlegemechanismen 4 lediglich eine Querbewegung zur Warenbahn 1 aus, ggf. auch eine Changierbewegung. Weisen die Antriebsbewegungen der Servoantriebe 7 und 8 jedoch eine Differenz auf, so bewegen sich je nach Größe der Differenz die Führungswinkel 15 eines Verlegemechanismus 4 voneinander weg oder aufeinander zu, so dass das Scherengetriebe entweder weiter geöffnet oder geschlossen wird. Infolgedessen ändern sich die gegenseitigen Abstände der Fadenführer 10 und damit das Legungsbild der Bändchen 2.

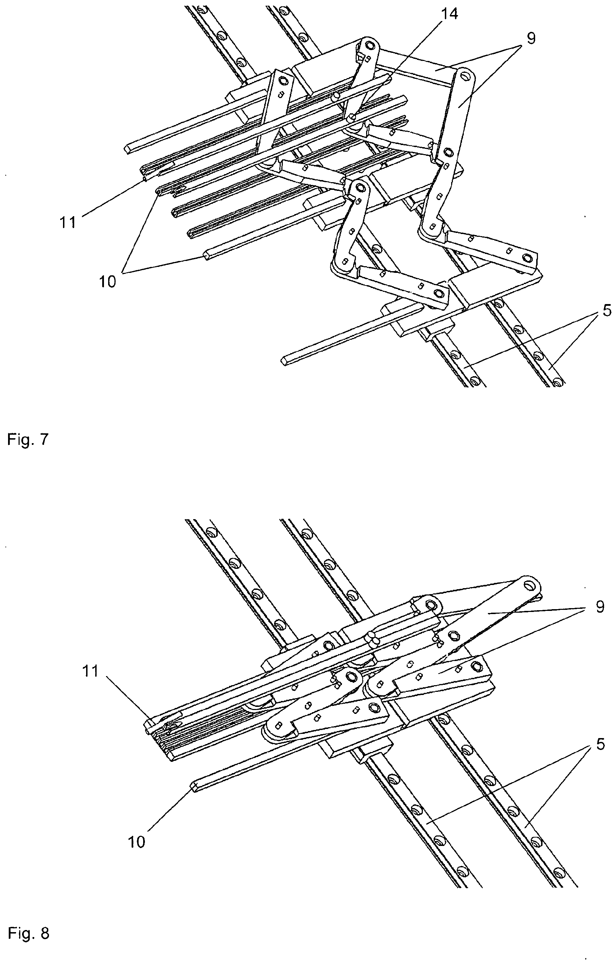

Fig. 7 zeigt eine abgewandelte Vorrichtung, bei der zum einen die Fadenführer 10 aus U-förmigen Profilen bestehen, zum anderen Fadenführer 10 oberhalb und unterhalb der Getriebeglieder 9 vorzugsweise versetzt zueinander angeordnet sind. Auf diese Weise lässt sich eine größere Dichte der zu verlegenden Schar von Bändchen 2 verwirklichen. Die Fadenführer 10 können außerdem wieder mit Fadenführerelementen 11 versehen sein. Fig. 8 zeigt diese Vorrichtung im geschlossenen Zustand mit aneinander anliegenden Fadenführern 10.

Die Verlegemechanismen können nun so betrieben werden, dass sie unter Beibehaltung der gewählten "Spreizung" über der Warenbahn entsprechend dem vorgesehenen Legemuster changieren, so dass die abgelegten Fäden parallel zueinander verlaufen. Es besteht jedoch auch die Möglichkeit, durch einen der vorhandenen Antriebe die "Spreizung" des Verlegemechanismus zu ändern. Dies kann sowohl einmalig zur Veränderung des Abstandes parallel abzulegender Bändchen 2 (siehe Fig. 1a-d) als auch stetig zur Erzeugung von Mustern mit veränderlichem Abstand der Bändchen 2 (siehe Fig. 1e-i) erfolgen. Die entsprechende Gegenüberstellung in der Stellung der Verlegemechanismen veranschaulichen die Fig. 6 und 7. Beide Fig. zeigen außerdem nur den jeweils kleinsten Grundbestandteil eines solchen Verlegemechanismus. Um eine vergrößerte Legungsbreite zu erreichen, ist es möglich, die dargestellte Baugruppe mehrfach nebeneinander anzuordnen, wie dies in Fig. 9 schematisch dargestellt ist.

Um mehrere Gruppen von Bändchen 2 unabhängig voneinander in unterschiedlicher Kontur verlegen zu können, müssen entsprechend mehrere der bspw. in Fig. 5 und 6 dargestellten Anordnungen bereitgestellt werden, z. B. wie in Fig. 10 dargestellt übereinander. Eine solche Anordnung ist vor allem dann erforderlich, wenn in bestimmten Bereichen eine Überdeckung der Bändchen 2 erzielt werden soll, bspw. wie in den Fig. 1b und 1f.

### Aufstellung der verwendeten Bezugszeichen

- 1: Warenbahn
- 2: Bändchen
- 3: freier Bereich
- 4: Verlegemechanismus
- 5: Schiene
- 6: Riemen
- 7: Servoantrieb
- 8: Servoantrieb
- 9: Getriebeglied
- 10: Fadenführer
- 11: Fadenführerelement
- 12: Lagergabel
- 13: Bohrung
- 14: Fuß
- 15: Führungswinkel

## Patentansprüche

1. Verfahren zur partiellen Verstärkung einer Warenbahn durch Aufbringen von Bändchen in vorbestimmtem Verlauf auf die Oberfläche der Warenbahn und dauerhafte Verbindung derselben mit der Warenbahn, wobei die quasi endlosen Bändchen gruppenweise kontinuierlich auf der Warenbahn abgelegt werden und in jeder Gruppe von Bändchen entsprechend einer vorgegebenen Kontur Abschnitte mit unterschiedlichem Verlauf der Bändchen zur Längsachse der Warenbahn und unterschiedlichem Grad der Bedeckung der Warenbahn durch die Bändchen gebildet werden, indem die Bändchen entweder mit gleichbleibender Breite lückenlos oder mit Abstand nebeneinander verlaufen, **dadurch gekennzeichnet,**
**dass** die Warenbahn ein bahnförmiges Gebilde mit einer Bewegungsrichtung ist und die Bändchen außerdem nach folgenden Möglichkeiten abgelegt werden:
-- die Bändchen (2) verlaufen mit gleichbleibender Breite und zunehmender / abnehmender Überdeckung und/oder
- die Bändchen (2) verlaufen mit zunehmender / abnehmender Breite nebeneinander und/oder
- die Bändchen (2) verlaufen mit zunehmender / abnehmender Breite und zunehmender / abnehmender Überdeckung.

2. Verfahren nach Anspruch 1, **dadurch gekennzeichnet, dass** in einer Gruppe von Bändchen (2) nacheinander mehrere der Möglichkeiten der gegenseitigen Anordnung der Bändchen (2) zur Anwendung kommen.

3. Verfahren nach einem oder mehreren der Ansprüche 1 und 2, **dadurch gekennzeichnet, dass** in einem Bereich der Warenbahn (1) mehrere Gruppen von Bändchen (2) abgelegt werden.

4. Verfahren nach Anspruch 3, **dadurch gekennzeichnet, dass** mehrere Gruppen von Bändchen (2) einander in einem Bereich der Warenbahn (1) überkreuzen.

5. Verfahren nach Anspruch 3, **dadurch gekennzeichnet, dass** Gruppen von Bändchen (2) in einem Bereich der Warenbahn (1) benachbart verlaufen und die Bändchen derart verlegt werden, dass belegungsfreie Zonen (3) gebildet werden.

6. Vorrichtung zur partiellen Verstärkung einer Warenbahn durch Aufbringen von Bändchen in vorbestimmtem Verlauf auf die Oberfläche der Warenbahn, insbesondere zur Durchführung des Verfahrens nach Anspruch 1, wobei die Bändchen von einem Vorrat abgezogen und in einer ausgebreiteten Schar einer Verlegeeinrichtung zugeführt werden und der Verlegeeinrichtung in Bewegungsrichtung der Warenbahn eine Verfestigungszone nachgeordnet ist, **dadurch gekennzeichnet, dass**
- die Verlegeeinrichtung zwei Verlegemechanismen (4) aufweist, wobei die Verlegemechanismen (4) unabhängig voneinander betreibbar sind,
- jeder Verlegemechanismus (4) derart querbeweglich zur Längsrichtung der auszustattenden Warenbahn (1) angeordnet ist, dass die gesamte Breite der Warenbahn (1) überfahrbar ist,
- jeder Verlegemechanismus (4) mit einer Mehrzahl von Führungen für jeweils ein Bändchen ausgestattet ist und dass
- auf jedem Verlegemechanismus (4) der Abstand der Führungen für die Bändchen variierbar ist.

7. Vorrichtung nach Anspruch 6, **dadurch gekennzeichnet, dass** die Verlegemechanismen (4) derart angeordnet sind, dass sich die von ihnen mit Bändchen (2) belegten Abschnitte der Warenbahn (1) überdecken können.

8. Vorrichtung nach den Ansprüchen 6 und 7, **dadurch gekennzeichnet, dass** ein Verlegemechanismus (4) aus einem quer zur Warenbahn (1) beweglich angeordneten, vielgliedrigen Scherenparallelogrammgetriebe besteht, das mit einer Vielzahl von Fadenführern (10) besetzt ist.

9. Vorrichtung nach den Ansprüchen 6 bis 8, **dadurch gekennzeichnet, dass** zusammenwirkende Antriebe (7; 8) vorgesehen sind, die sowohl die Verlegebewegung als auch die Teilungsänderung eines Verlegemechanismus (4) bewirken.

10. Vorrichtung nach den Ansprüchen 6 bis 8, **dadurch gekennzeichnet, dass** separate Antriebe (7; 8) für die Verlegebewegung und für die Teilungsänderung eines Verlegemechanismus (4) vorgesehen sind.

11. Vorrichtung nach den Ansprüchen 6 bis 10, **dadurch gekennzeichnet, dass** die Fadenführer (10) auf den Verlegemechanismen (4) in mindestens einer Ebene angeordnet sind.

12. Vorrichtung nach Anspruch 11, **dadurch gekennzeichnet, dass** die Fadenführer (10) auf den Verlegemechanismen (4) in mehreren Ebenen und gegeneinander versetzter Teilung angeordnet sind.

13. Vorrichtung nach den Ansprüchen 6 bis 10, **dadurch gekennzeichnet, dass** die Fadenführer (10) als U-förmige Schienen mit gegen die Warenbahn (1) gerichteten Fadenführerelementen (11) ausgebildet sind.

## Claims

1. Method for partial reinforcement of a material web by applying ribbons to the surface of the material web in a predetermined course and a permanent connection thereof with the material web, wherein the virtually endless ribbons are continuously deposited on the material web in groups and in each group of ribbons sections with a differing course of ribbons with relation to the longitudinal axis of the material web and a differing degree of coverage of the material web by the ribbons is formed according to a predefined contour, whereby the ribbons either run along side by side at a constant width without gaps or at a distance,
**characterized in that**
the material web is a web-shaped structure with a movement direction and the ribbons are moreover deposited by means of the following possibilities:
- the ribbons (2) run along with constant width and increasing / decreasing coverage and / or
- the ribbons (2) run along side by side with increasing / decreasing width and / or
- the ribbons (2) run along with increasing / decreasing width and increasing / decreasing coverage.

2. Method according to claim 1, **characterized in that** several of the possibilities of the reciprocal arrangement of the ribbons (2) are successively applied in one group of ribbons (2).

3. Method according to one or several of the claims 1 and 2, **characterized in that** several groups of ribbons (2) are placed in one area of the material web (1).

4. Method according to claim 3, **characterized in that** several groups of ribbons (2) cross each other in one area of the material web (1).

5. Method according to claim 3, **characterized in that** groups of ribbons (2) run along adjacent to each other in one area of the material web (1) and the ribbons are placed in such a way that non-covered zones (3) are formed.

6. Device for partial reinforcement of a material web by applying ribbons to the surface of the material web in a predetermined course, particularly for carrying out the method according to claim 1, wherein the ribbons are drawn from a supply and are supplied to a laying device in a spread form and a strengthening zone is arranged downstream of the laying device in movement direction of the material web,
**characterized in that**
- the laying device comprises two laying mechanisms (4), wherein the laying mechanisms (4) can be operated independently from one another,
- each laying mechanism (4) is arranged transversely movable to the longitudinal direction of the material web (1) to be equipped in such a way that the entire width of the material web (1) is traversable,
- each laying mechanism (4) is equipped with a plurality of guides for one ribbon each, and that
- the distance of the guides for the ribbons can be varied on each laying mechanism (4).

7. Device according to claim 6, **characterized in that** the laying mechanisms (4) are arranged in such a way that the sections of the material web (1) covered by them with ribbons (2) can overlap.

8. Device according to claims 6 and 7, **characterized in that** a laying mechanism (4) consists of a multisection scissors parallelogram drive movable transversely to the material web (1), which is equipped with a plurality of thread guides (10).

9. Device according to the claims 6 to 8, **characterized in that** interacting drives (7; 8) are provided which induce both the laying movement as well as the pitch change of a laying mechanism (4).

10. Device according to one of the claims 6 to 8, **characterized in that** separate drives (7; 8) are provided for the laying movement and the pitch change of a laying mechanism (4).

11. Device according to one of the claims 6 to 10, **characterized in that** the thread guides (10) are arranged in at least one level on the laying mechanisms (4).

12. Device according to claim 11, **characterized in that** the thread guides (10) are arranged on the laying mechanisms (4) in several levels and offset pitch to one another.

13. Device according to the claims 6 to 10, **characterized in that** the thread guides (10) are formed as U-shaped rails with thread guiding elements (11) directed against the material web (1).

## Revendications

1. Procédé pour le renforcement partiel d'une bande de produit en appliquant des rubans dans un cours prédéterminé sur la surface de la bande de produit et en les reliant de manière permanente à la bande de produit,
les rubans pour ainsi dire interminables étant déposés en groupes sur la bande de produit continument et dans chaque groupe de rubans des sections avec un cours de rubans différent par rapport à l'axe longitudinale de la bande de produit et un degré de couverture de la bande de produit différent sont formées par les rubans selon une contour correspondante prédéterminée, les rubans s'étendant côté à côté avec une largeur constante ou bien sans des espaces ou bien avec des espaces, **caractérisé en ce que**
la bande de produit est une formation en forme de bande avec une direction de mouvement, et en plus les rubans sont déposés selon les possibilités suivantes :
- les rubans (2) s'étendent avec une largeur constante et une couverture croissante / décroissante, et / ou
- les rubans (2) s'étendent côte à côte avec une largeur croissante / décroissante, et / ou
- les rubans (2) s'étendent avec une largeur croissante / décroissante et une couverture croissante / décroissante.

2. Procédé selon la revendication 1, **caractérisé en ce que** dans un groupe de rubans (2) plusieurs des possibilités d'agencement mutuel des rubans (2) sont utilisées successivement.

3. Procédé selon l'une ou plusieurs des revendications 1 et 2, **caractérisé en ce que** plusieurs groupes de rubans (2) sont déposées dans une section de la bande de produit (1).

4. Procédé selon la revendication 3, **caractérisé en ce que** plusieurs groupes de rubans (2) se croisent dans une section de la bande de produit (1).

5. Procédé selon la revendication 3, **caractérisé en ce que** des groupes de rubans (2) sont adjacents les uns aux autres dans une section de la bande de produit (1) et les rubans sont déposés de telle sorte que des zones (3) sans couverture sont formées.

6. Dispositif pour le renforcement partiel d'une bande de produit en appliquant des rubans dans un cours prédéterminé sur la surface de la bande de produit, en particulier pour mettre en œuvre le procédé selon la revendication 1, les rubans étant enlevés d'une réserve et alimentés vers un dispositif de pose comme une nappe étendue, et une zone de consolidation étant disposée en aval du dispositif de pose en direction de mouvement de la bande de produit, **caractérisé en ce que**
- le dispositif de pose comprend au moins deux mécanismes de pose (4), les mécanismes de pose (4) pouvant être actionnés indépendamment les uns des autres,
- chaque mécanisme de pose (4) est agencé pour être déplacé transversalement à la direction longitudinale de la bande de produit (1) de sorte que toute la largeur de la bande de produit (1) peut être traversée,
- chaque mécanisme de pose (4) est équipé d'une pluralité de guides pour un ruban respectivement, et que
- sur chaque mécanisme de pose (4), la distance des guides pour les rubans est variable.

7. Dispositif selon la revendication 6, **caractérisé en ce que** les mécanismes de pose (4) sont agencés de telle sorte que les sections de la bande de produit (1) recouvertes de rubans (2) par eux peuvent se chevaucher.

8. Dispositif selon les revendications 6 et 7, **caractérisé en ce qu'**un mécanisme de pose (4) consiste d'un engrenage à parallélogramme à ciseaux de plusieurs sections, qui est disposé de manière mobile transversalement à la bande de produit (1) et qui est équipé d'une pluralité de guide-fils (10).

9. Dispositif selon les revendications 6 à 8, **caractérisé en ce que** des entraînements coopérants (7; 8) sont prévus, qui effectuent à la fois le mouvement de pose et le changement de pas d'un mécanisme de pose (4).

10. Dispositif selon les revendications 6 à 8, **caractérisé en ce que** des entraînements séparés (7; 8) sont prévus pour le mouvement de pose et pour changer le pas d'un mécanisme de pose (4).

11. Dispositif selon les revendications 6 à 10, **caractérisé en ce que** les guide-fils (10) sont agencés sur au moins un niveau sur les mécanismes de pose (4).

12. Dispositif selon la revendication 11, **caractérisé en ce que** les guide-fils (10) sont agencés sur plusieurs niveaux et à pas mutuellement décalé sur les mécanismes de pose (4).

13. Dispositif selon les revendications 6 à 10, **caractérisé en ce que** les guide-fils (10) sont conçus comme des barres en forme d'U avec des éléments de guide-fil (11) alignés contre la bande de produit (1).
